(19)

Europäisches
Patentamt
European
Patent Office
Office européen
des brevets

(11)     **EP 3 240 229 A1**

(12)     **EUROPEAN PATENT APPLICATION**

(43) Date of publication:
**01.11.2017 Bulletin 2017/44**

(51) Int Cl.:
***H04L 12/12*** (2006.01)          ***H04L 12/40*** (2006.01)

(21) Application number: **17382113.3**

(22) Date of filing: **06.03.2017**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.04.2016 ES 201600340**

(71) Applicant: **Universidade de Vigo
36310 Vigo (ES)**

</td><td>

(72) Inventors:
- **HERRERÍA ALONSO, Sergio
  36310 VIGO (Pontevedra) (ES)**
- **RODRIGUEZ PEREZ, Miguel
  36310 VIGO (Pontevedra) (ES)**
- **FERNANDEZ VEIGA, Manuel
  36310 VIGO (Pontevedra) (ES)**
- **LÓPEZ GARCÍA, Cándido Antonio
  36310 VIGO (Pontevedra) (ES)**

(74) Representative: **Herrero & Asociados, S.L.
Cedaceros, 1
28014 Madrid (ES)**

</td></tr>
</table>

(54)     **DEVICE AND METHOD FOR ENERGY SAVINGS IN NETWORK INTERFACES**

(57)     The invention relates to a device (102) and method for energy savings in network interfaces which obtains maximum energy savings while at the same time allows controlling the mean delay of the frames to be transmitted. The device comprises an energy-saving management module (LPI) (201) controlling use of the energy-saving modes provided for in standard IEEE 802.3bj-2014 by means of measuring the characteristics of the traffic to be transmitted.

To achieve the objective, the energy-saving management module (LPI) (201) incorporates a low consumption modes management module (202), in addition to a traffic rate estimator (204) and a decision-making module (203) that is in charge of selecting the most suitable energy-saving mode at all times from among those that are available.

**EP 3 240 229 A1**

**Description**

Technical Field

The field of application of the invention refers to information and communications technologies, and it more particularly relates to data packet networks on the Internet and to metropolitan Ethernet networks.

Background of the Invention

Conventionally, network interfaces pertaining to Ethernet technology, i.e., IEEE 802.3 family, are lacking any mechanism of energy consumption control. Therefore, their consumption used to be completely independent of the characteristics of the traffic to be transmitted.

To solve this problem and reduce consumption, standard IEEE 802.3az was created in 2009 and it allows 100 Mb/s, 1 Gb/s and 10 Gb/s interfaces to enter a saving mode with less energy consumption when traffic is not required to be transmitted.

Given that the standard does not set the low consumption mode activation conditions, the scientific community has proposed and studied various algorithms in order to decide on low consumption mode activating and deactivating conditions. The most widely studied algorithms are *frame transmission* and *packet coalescing/burst transmission.* Both mechanisms activate the low energy mode when the interface has no traffic left to be transmitted. The difference lies in the fact that the first algorithm returns to normal mode as soon as it again has traffic pending transmission, whereas in the second algorithm, a certain amount of traffic is expected to be accumulated, so lower consumptions are obtained in exchange for a greater mean delay. How to maximize obtained savings, limiting the delay to a pre-set value, is generally an open problem.

With the arrival of 40 Gb/s and 100 Gb/s interfaces, the annex of standard IEEE 802.3bj-2014 establishes not one but two low consumption modes for the interfaces over physical copper medium with different associated saving and latency capabilities. Again, the standard overlooks setting conditions in which each mode must be activated or deactivated, such that device manufacturers compete with one another in an attempt to find low consumption management methods that are most suitable for both modes.

The present invention allows a 40 Gb/s or 100 Gb/s Ethernet network interface to select at all times the low consumption mode that is most suitable for the traffic pattern to be transmitted. At the same time, it allows the interface administrator to decide the mean delay that will be tolerated for the traffic transmitted by said card. The present invention is automatically in charge of maximizing savings obtained while at the same time maintaining the mean delay in the pre-set value.

Description of the Invention

The present invention consists of a network device incorporating a method regulating the use of low energy consumption modes of network interfaces according to standard IEEE 802.3 over copper links used at rates of 40 Gb/s or higher. In particular, the invention is limited to those interfaces implementing both the low consumption mode, i.e., Fast-Wake (hereinafter FW), and the optional low consumption mode, i.e., Deep-Sleep (hereinafter DS). The method of the described device allows maximizing energy savings, maintaining the mean delay of the frames around a threshold selected by the device administrator.

One aspect of the present invention relates to an energy-efficient network device compatible with IEEE 802.3 Ethernet interfaces comprising the following elements:

1) physical support interface (PHY) in charge of converting Ethernet messages and frames into electrical signals to be transmitted by a physical medium, and additionally, of converting the electrical signals received through a physical medium into Ethernet messages and frames.

2) A media access management module (MAC) in charge of transmitting and receiving Ethernet frames, as well as control messages, through a physical support interface (PHY).

3) An energy-saving management module (LPI) in charge of managing low consumption modes of the device. The energy-saving management module (LPI) in turn comprises an outgoing traffic characterizing module, a decision-making module, a low consumption mode management module and a method for choosing the energy-saving mode that consumes the least according to the outgoing traffic pattern.

4) At least one network interface client module receiving the frames to be sent from the user of the device.

5) A memory module where the frames waiting to be transmitted are temporarily stored.

In a preferred embodiment, the energy-saving management module (LPI) comprises an internal counter of frames used for determining the instant in which it must return to the active operating mode.

In a preferred embodiment, the communication between the media access management module (MAC) and the network interface client is performed through a data bus. In turn, the media access management module (MAC) and the energy-saving management module (LPI) are communicated through two communication lines, one for each communication direction. Communication between the memory module and the energy-saving management module (LPI) and between the memory module and the media access management module (MAC) is performed by means of the same data bus used for communication between the media access management module (MAC) and the network interface client.

In a preferred embodiment, the communication of the frames between the physical support interface (PHY) and the media access management module (MAC) is performed through two communication lines, one for each communication direction.

In a specific embodiment, the memory that is used for storing the frames pending transmission can be contained in the network device or a memory located outside the network device could be used.

Another aspect of the invention consists of a method that manages the various operating modes of the device: the normal operating mode and the two energy-saving modes, FW and DS, respectively. To that end, the energy-saving management module (LPI) (201) maximizes the savings obtained while at the same time maintains the mean outgoing traffic delay around a pre-set value $W^*$ and comprises the following steps:

a) calculating, by the outgoing traffic characterizing module (204), the estimated mean outgoing traffic rate $\hat{\lambda}$;
b) calculating, by the decision-making module (203), the maximum rate threshold $\lambda^*$ below which only the DS mode is used, according to the desired mean delay $W^*$ and the physical characteristics of the network device;
c) calculating, by the decision-making module (203), the mean delay threshold $\tilde{W}$ above which the DS mode must always be used, according to the physical characteristics of the network device;
d) calculating, by the low consumption mode management module (202), the maximum number of frames $Q^*$ that must be delayed in any of the low consumption modes before returning the device to normal operating mode, according to the estimated mean rate $\hat{\lambda}$, the interface characteristics, the low consumption mode used and the desired mean delay $W^*$.

In a preferred embodiment of the invention, the method in question can be broken down into two (sub-)methods dedicated to managing the device when it is in normal operating mode and to managing the device when it is in a low consumption mode, respectively. The transition to any of the low consumption modes is performed after completing transmission of a frame if the following is simultaneously held:

a) there are no more frames pending transmission in the memory module (106), and
b) the desired mean delay $W^*$ is greater than half the transition time between the FW mode and the normal operating mode $(T_W^f)$.

In a preferred embodiment, the transition to the chosen energy-saving mode is FW if the following is simultaneously held:

a) the desired mean delay $W^*$ is less than the mean delay threshold $\tilde{W}$, and
b) the estimated mean rate $\hat{\lambda}$ is greater than the maximum rate threshold $\lambda^*$.

However, the transition to the chosen energy savings is DS if the following is held:

a) the desired mean delay $W^*$ is greater than or equal to the mean delay threshold $\tilde{W}$, or
b) the estimated mean rate $\hat{\lambda}$ is less than or equal to the maximum rate threshold $\lambda^*$.

In a preferred embodiment of the invention, the method dedicated to managing the device when it is in normal operating mode is the method in charge of measuring the essential characteristics of the outgoing traffic, of deciding when to enter a low consumption mode and of deciding which energy-saving mode (FW or DS) is the most suitable. The method is implemented in the energy-saving management module (LPI) by means of communication with the media access management module (MAC) and the physical support interface (PHY). The method comprises the following steps:

a) the network interface client module delivering a frame to the media access management module (MAC), which is communicated to the energy-saving management module (LPI).
b) The energy-saving management module (LPI) updating the device-transmitted traffic statistics.
c) Upon completing the transmission of each frame, the physical support interface module (PHY) communicating same to the media access management module (MAC), which will then transmit the next frame present in the memory to the physical support interface (PHY), or in the event that there are no more frames, indicating this to the energy-saving management module (LPI) by activating a specific signal in the link joining them together.
d) After activation of the signal by the media access management module (MAC) indicating that there are no more frames pending transmission, the energy-saving management module (LPI) calculating, according to the characteristics of the traffic and of the mean delay allowed, which is the most suitable energy-saving mode, a signal being activated thereafter in the link between the energy-saving management module (LPI) and the physical support interface (PHY) identifying the selected low consumption mode and another signal being activated between the energy-saving management module (LPI) and the media access management module (MAC) preventing the latter from trying to transmit new frames.

In a preferred embodiment, the method in charge of managing the device in the low consumption mode comprises the following steps:

a) the network interface client module delivering a frame to the media access management module (MAC), which is communicated to the energy-saving management module (LPI).

b) The low consumption mode management module increasing the value of the internal counter of frames pending transmission by one.

c) If the counter reaches a predetermined value depending on the mean delay allowed, the signal between the energy-saving management module (LPI) and the media access management module (MAC) that caused the latter to not transmit frames and the signal in the link between the energy-saving management module (LPI) and the physical support interface (PHY) identifying the selected low consumption mode are deactivated, such that the device returns to normal operating mode.

Brief Description of the Drawings

To complement the description that is being made and for the purpose of helping to better understand the features of the invention, a set of drawings is attached as an integral part of said description, in which the following is depicted with an illustrative and non-limiting character:

Figure 1 shows a block diagram of the device object of the invention.

Figure 2 shows a block diagram of the energy-saving management module (LPI).

Preferred Embodiment of the Invention

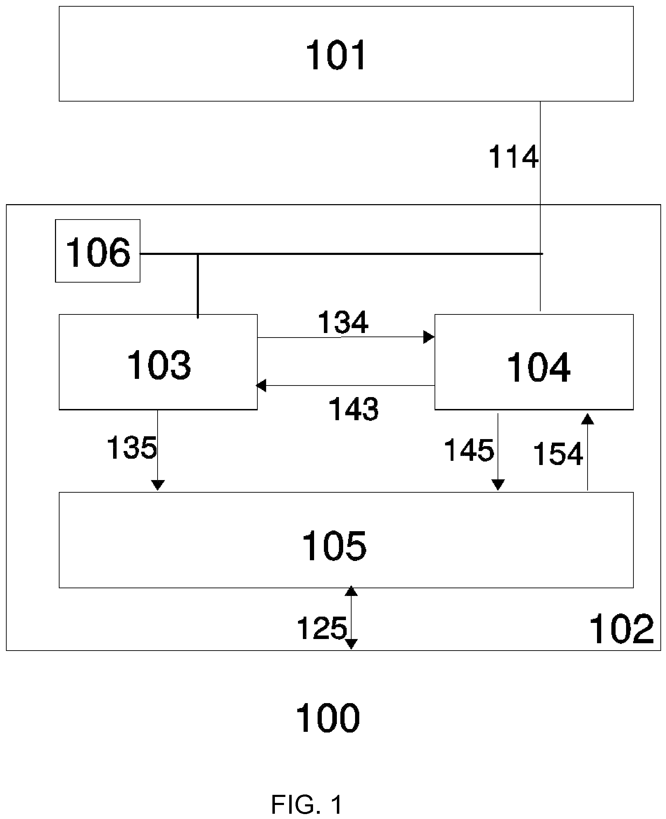

Figure 1 shows the main elements of a possible preferred implementation of the invention. The services are described in an abstract manner and they do not presuppose any particular implementation or interface described, other embodiments being possible.

In the implementation shown, an Ethernet network device complying with standard IEEE 802.3bj-2014 and implementing the optional energy-saving mode referred to as Deep-Sleep (DS) (102) is used by a network interface client module (101) for sending and receiving Ethernet frames through a physical medium (100). In a possible preferred implementation, the network device comprises an energy-saving management module (LPI) (103) communicated with the physical support interface (PHY) (105) and a media access management module (MAC) (104). In the implementation shown, there is an internal memory module (106) where frames pending transmission inside the network device (102) are stored, although in other implementations the memory module could be located outside the device.

For managing low consumption modes, when the network interface client module (101) wants to send a new frame, it communicates this (114) to the media access management module (MAC) (104), and the latter in turn communicates this (143) to the energy-saving management module (LPI) (103). If the interface is not in a low consumption mode, the signal 134 will be in an inactive state, logic 0, and the media access management module (MAC) (104) will transmit the frame when the physical support interface (PHY) (105) allows it. Until this happens, the media access management module (MAC) (104) can make use of the memory module (106) for temporarily storing the frame. Communication of the frames between the media access management module (MAC) (104) and the physical support interface (PHY) is done through two communication lines: 145 and 154, one for each communication direction.

On the other hand, if when the network interface client module (101) wants to send a new frame, the media access management module (MAC) (104) finds that the interface is in one of the low consumption modes (a value in the signal 134 with logic 1), the media access management module (MAC) (104) stores the frame in the memory module (106).

In the preferred implementation of the invention, every time a frame finishes being transmitted, the media access management module (MAC) (104) communicates this (143) to the energy-saving management module (LPI) (103). The energy-saving management module (LPI) (103) can therefore make the decision to enter a low consumption mode and communicate this to the physical support interface (PHY) (105) through 135.

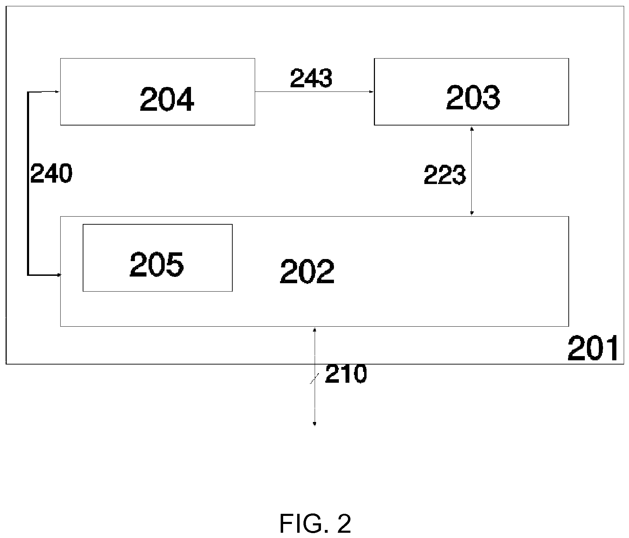

Figure 2 shows in detail the operation and composition of a preferred implementation of the energy-saving management module (LPI) (201). Its main components are an outgoing traffic characterizing module (204), a decision-making module (203) for choosing the most suitable low consumption mode at all times and a low consumption mode management module (202) in charge of managing the mechanism of coalescence in turn containing an internal counter of frames (205). The energy-saving management module (LPI) (201) is communicated with the remaining components of the network device by means of a data bus (210) comprising signals 134, 135 and 143 and all the lines of the data bus 114 of Figure 1.

In the preferred implementation of the invention, every time the network interface client delivers a frame to be transmitted to the network device, the low consumption mode management module (202) communicates this (240) to the outgoing traffic characterizing module (204) which updates the value of an estimation of said traffic mean rate, $\hat{\lambda}$, from the measurement of the time elapsed since the delivery of the preceding frame. On the other hand, after the transmission of each frame, the low consumption modes management module (202) checks the number of frames stored in the memory module (106) through the bus 210, and if there are none, it consults with the decision-making module (203) on the most appropriate consumption saving mode through the link 223.

In the preferred implementation described, the decision-making module (203) performs the following tasks to decide on the operating mode:

a) The following constants are calculated:

$$c = (1 - \sigma_{off}^d)/(1 - \sigma_{off}^f),$$

$$a = cT_S^d T_W^f - T_S^f T_W^d \quad \text{and}$$

$$b = T_W^d - T_S^f + c(T_S^d - T_W^f),$$ where all the parameters are known physical characteristics of the device. In particular, $\sigma_{off}^d$ is consumption in DS mode relating to active interface consumption, $\sigma_{off}^f$ the consumption in FW mode relating to active interface consumption, $T_S^d$ and $T_S^f$ are, respectively, the transition times for transitioning between the active mode and the DS and FW modes. Finally, $T_W^d$ and $T_W^f$ are, respectively, the transition times for transitioning from the DS and FW modes to the active mode.

b) It compares the desired delay W*with $T_W^f/2.$ If it is less, it does not enter a low consumption mode.

c) If the desired delay W* is comprised between $T_W^f/2$ and $T_W^d/2,$ it transitions to the FW mode. To that end, it sends a message to the low consumption mode management module (202) through 223 and this activates the signal 134 and establishes the value corresponding to the FW mode in the link 135.

d) It obtains the value of $\hat{\lambda}$, which is transmitted in a continuous manner over the communication line 243.

e) If the desired delay W* is greater than $T_W^d/2,$

$$\tilde{\lambda} = (T_W^d - 2W^* + \frac{2a}{\sqrt{b^2 - 4a(1-c)} - b})^{-1} \quad \text{and}$$

$$\widetilde{W} = \frac{T_W^d}{2} + \frac{a}{\sqrt{b^2 - 4a(1-c)} - b} \quad \text{are calculated.}$$

Then if $\hat{\lambda} > \tilde{\lambda}$ and W* < $\widetilde{W}$, it transitions to FW mode. To that end, it sends a message to the low consumption mode management module (202) through 223 and this activates the signal 134 and establishes the value corresponding to the FW mode in the link 135.

f) In another case, the decision-making module indicates that it is necessary to transition to the DS mode. To that end, it sends a message to the low consumption mode management module (202) through 223 and this activates the signal 134 and establishes the value corresponding to the DS mode in the link 135.

When the decision-making module (203) indicates that it is necessary to transition to a low consumption mode (FW or DS), the low consumption mode management module (202) of the preferred implementation described performs the following tasks:

a) it indicates to the physical support interface (PHY) (105, Figure 1) through the bus 210 that the chosen LPI mode (FW or DS, as appropriate) must be activated.

b) It establishes the value of the counter (205) at 0.

c) It calculates a maximum value for the counter (205) $Q^* = (2W^* - T_W)\hat{\lambda} + 1$ for maintaining the mean delay around the value W*, where $T_W = T_W^f$ if the device is in the FW mode or $T_W = T_W^d$ if the device is in the DS mode.

While the device remains in the low consumption mode, in the preferred implementation of the invention the low consumption mode management module (202) performs the following tasks every time a new frame is received from the network interface client:

a) it increases the value of the counter (205) by one.

b) If the counter (205) reaches the value Q*, low consumption mode is abandoned.

After abandoning the low consumption mode, the energy-saving management module (LPI) (103) communicates to the physical support interface (PHY) (104, Figure 1) and to the media access management module (MAC) (105, Figure 1) through the bus 210 that they must resume normal operation and transmit the frames stored in the memory (106, Figure 1). In particular, the energy-saving management module (LPI) (103) deactivates the signals of links 134 and 135 (value 0).

**Claims**

1. Network device (102) for energy savings compatible with IEEE 802.3 Ethernet interfaces comprising:

a) a physical support interface (PHY) (105) in charge of converting Ethernet messages and frames into electrical signals and vice versa;

b) a media access management module (MAC) (104) in charge of transmitting and receiving Ethernet frames and control messages through a physical support interface (PHY) (105);

c) an energy-saving management module (LPI) (103) in charge of managing low consumption modes of the device;

d) at least one network interface client module (101) receiving the frames to be sent from the user of the device;

e) a memory module (106) temporarily storing the frames pending transmission;

f) a data bus (114) communicating the media access management module (MAC) (104), the network interface client module (101), the memory module (106) and the energy-saving management module (LPI) (103) with one another;

g) two communication lines (134 and 143) communicating the energy-saving management module (LPI) (103) and the media access management module (MAC) (104) with one another;

h) two communication lines (145 and 154) communicating the media access management module (MAC) (104) and the physical support interface (PHY) (105) with one another;

**characterized in that** the energy-saving management module LPI (103 and 201) comprises an outgoing traffic characterizing module (204), a decision-making module (203) that allows choosing the energy-saving mode that consumes the least according to the outgoing traffic pattern and a low consumption mode management module (202) in charge of managing the mechanism of coalescence that is capable of maintaining the mean outgoing traffic delay around a pre-established value.

2. Device according to claim 1, **characterized in that** the low consumption modes management module (202) comprises an internal counter (205) for determining the instant of returning to the active operating mode.

3. Device according to claim 1, **characterized in that** the memory module (106) is located outside the device.

4. Device according to claim 1, **characterized in that** communications between the energy-saving management module (LPI) (201) and the remaining components of the network device (102) are performed through a data bus (210) in turn comprising the following communication lines: 134, 135, 143 and all those pertaining to the bus 114.

5. Management method for managing energy savings of IEEE 802.3 Ethernet network interfaces, **characterized in that** the energy-saving management module (LPI) (201) maximizes the savings obtained while at the same time maintains the mean outgoing traffic delay around a pre-set value $W^*$ and comprising the following steps:

- calculating, by the outgoing traffic characterizing module (204), the estimated mean outgoing traffic rate $\hat{\lambda}$;

- calculating, by the decision-making module (203), the maximum rate threshold $\lambda^*$ below which only the DS mode is used, according to the desired mean delay $W^*$ and the physical characteristics of the network device;

- calculating, by the decision-making module (203), the mean delay threshold W above which the DS mode must always be used, according to the physical characteristics of the network device;

- calculating, by the low consumption modes management module (202), the maximum number of frames $Q^*$ that must be delayed in any of the low consumption modes before returning the device to normal operating mode, according to the estimated mean rate $\hat{\lambda}$, the interface characteristics, the low consumption mode used and the desired mean delay $W^*$.

6. The method according to claim 5, **characterized in that** the transition to any of the low consumption modes is performed after completing transmission of a frame if the following is simultaneously held:

- there are no more frames pending transmission in the memory module (106), and
- the desired mean delay $W^*$ is greater than half the transition time between the FW mode and the normal operating mode $\left(T_W^f\right)$.

7. Method according to claims 5 and 6, **characterized in that** the chosen energy-saving mode is FW if the following is simultaneously held:

- the desired mean delay $W^*$ is less than the mean delay threshold $\tilde{W}$, and
- the estimated mean rate $\hat{\lambda}$ is greater than the maximum rate threshold $\lambda^*$.

8. Method according to claims 5 to 7, **characterized in that** the chosen energy-saving mode is DS if the following is held:

- the desired mean delay $W^*$ is greater than or equal to the mean delay threshold $\tilde{W}$, or
- the estimated mean rate $\hat{\lambda}$ is less than or equal to the maximum rate threshold $\lambda^*$.

9. Method according to claims 5 and 6, **characterized in that** the management method to be implemented in normal operating mode comprises the following steps:

- the network interface client module delivering a frame to the media access management module (MAC) (104), which is communicated to the energy-saving management module (LPI) (103);

- the energy-saving management module (LPI) (201) updating device-transmitted traffic statistics;

- upon completing the transmission of each frame, the physical support interface (PHY) (105) communicating same to the media access management module (MAC) (104), which will then transmit the next frame present in the memory module (106) to the physical support interface (PHY) (105), or in the event that there are no more frames, indicating this to the energy-saving management module (LPI) (103) by activating a specific signal in the link joining them together (143);

- after activation of the signal by the media access management module (MAC) (104) indicating that there are no more frames pending transmission, the energy-saving management module (LPI) (201) calculating, according to the characteristics of the traffic and of the mean delay allowed, which is the most suitable energy-saving mode, a signal being activated thereafter in the link (135) between the energy-saving management module (LPI) (103) and the physical support interface (PHY) (205) identifying the selected low consumption mode and another signal being activated in the link (134) between the energy-saving management module (LPI) (103) and the media access management module (MAC) (104) preventing the latter from trying to transmit new frames.

**10.** Method according to claims 5 to 8, **characterized in that** the management method to be implemented in the low consumption mode comprises the following steps:

- the network interface client module (101) delivering a frame to the media access management module (MAC) (104), which is communicated to the energy-saving management module (LPI) (103);

- the low consumption mode management module (202) increasing the value of an internal counter (205) of frames pending transmission by one;

if the counter (205) reaches a predetermined value depending on the mean delay allowed, the signal (134) between the energy-saving management module (LPI) (103) and the media access management module (MAC) (104) that caused the latter to not transmit frames and the signal in the link (135) between the energy-saving management module (LPI) (103) and the physical support interface (PHY) (105) identifying the selected low consumption mode are deactivated, such that the device returns to normal operating mode.

FIG. 1

FIG. 2

Europäisches
Patentamt

European
Patent Office

Office européen
des brevets

# EUROPEAN SEARCH REPORT

Application Number

EP 17 38 2113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Angelos Chatzipapas ET AL: "An M/G/1 Model for Gigabit Energy Efficient Ethernet Links With Coalescing and Real-Trace-Based Evaluation",<br><br>,<br>16 October 2015 (2015-10-16), XP055378613,<br>Retrieved from the Internet:<br>URL:http://eprints.networks.imdea.org/1134/1/An_MG1_Model_for_Gigabit_Energy_Efficient_Ethernet_Links_2015.pdf<br>[retrieved on 2017-06-06]<br>* the whole document * | 1-10 | INV.<br>H04L12/12<br>H04L12/40 |
| A | SERGIO HERRERIA-ALONSO ET AL: "A GI/G/1 Model for 10 Gb/s Energy Efficient Ethernet Links",<br>IEEE TRANSACTIONS ON COMMUNICATIONS, IEEE SERVICE CENTER, PISCATAWAY, NJ. USA,<br>vol. 60, no. 11,<br>1 November 2012 (2012-11-01), pages 3386-3395, XP011473858,<br>ISSN: 0090-6778, DOI:<br>10.1109/TCOMM.2012.081512.120089<br>* the whole document * | 1-10 | |
| A | MOSTOWFI MEHRGAN: "A Simulation Study of Energy-Efficient Ethernet With Two Modes of Low-Power Operation",<br>IEEE COMMUNICATIONS LETTERS, IEEE SERVICE CENTER, PISCATAWAY, NJ, US,<br>vol. 19, no. 10,<br>1 October 2015 (2015-10-01), pages 1702-1705, XP011586429,<br>ISSN: 1089-7798, DOI:<br>10.1109/LCOMM.2015.2461161<br>[retrieved on 2015-10-08]<br>* the whole document * | 1-10 | TECHNICAL FIELDS SEARCHED (IPC)<br><br>H04L<br>G06F |

The present search report has been drawn up for all claims

| Place of search | Date of completion of the search | Examiner |
|---|---|---|
| Munich | 6 June 2017 | Raible, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)